# EUROPÄISCHE PATENTSCHRIFT

(11) **EP 3 885 100 B1**
(45) Veröffentlichungstag und Bekanntmachung des Hinweises auf die Patenterteilung: **17.01.2024**
(21) Anmeldenummer: 21162118.0
(22) Anmeldetag: 11.03.2021
(51) Int. Cl.: B29C 45/56, B29C 45/26, B29C 45/73, B29C 45/00

(54) **WERKZEUG ZUM SPRITZGIESSEN VON KUNSTSTOFFTEILEN**
TOOL FOR INJECTION MOULDING OF PLASTIC PARTS
OUTIL DE MOULAGE PAR INJECTION DE PIÈCES EN MATIÈRE PLASTIQUE

(30) Priorität: 25.03.2020 DE 202020101612 U
(43) Veröffentlichungstag der Anmeldung: 29.09.2021
(73) Patentinhaber: Braunform GmbH, 79353 Bahlingen (DE)
(72) Erfinder: SEEBACHER, Georg Franz, 79350 Sexau (DE)
(74) Vertreter: Kleine, Hubertus

(56) Entgegenhaltungen:
- EP-A1- 0 363 948
- DE-A1- 4 105 687
- DE-A1- 10 234 198
- DE-A1- 10 248 975
- DE-A1-102004 056 451
- DE-A1-102005 058 205
- JP-A- H 079 482
- JP-A- 2001 179 780

## Beschreibung

Die vorliegende Erfindung betrifft ein Werkzeug zum Spritzgießen von Kunststoffteilen nach dem Oberbegriff des Anspruchs 1.

Die vorliegende Erfindung befasst sich insbesondere mit der Schaffung einer Sollbruchstelle für einen Spritzgießling.

Definierte Sollbruchstellen mit derart geringen Wandstärken, z.B. von weniger als 0,2 mm wie sie in dem vorgenannten Anwendungsbereich benötigt werden, sind nur schwer in einem Spritzgussprozess zu realisierten.

Ein nachträgliches Einfügen einer Sollbruchstelle kann zwar erfolgen, erfordert allerdings eine zusätzliche Maschine und einen zusätzlichen Fertigungsschritt zu Lasten der Fertigungszeiten eines entsprechenden Spritzgießlings.

Die vorliegende Erfindung setzt bei der Aufgabe an, ein Werkzeug bereitzustellen, welches es ermöglicht einen entsprechenden Spritzgießling mit geringen Fertigungszeiten bereitzustellen.

Sollbruchstellen sind u.a. bereits in der DE 102 34 198 A1 und der DE 10 2004 056 451 A1 realisiert. Hierbei wird eine heiße Klinge in das Material durch eine Hubbewegung eingeführt.

Weitere Varianten von axial-bewegten rohrförmigen Klingen sind aus der EP 0 363 948 A1, der DE 102 48 975 A1 und der JP 2001 179780 A bekannt.

Die JP H07 9482 A offenbart demgegenüber eine rohrförmige Klinge, welche im Rahmen einer Drehhubbewegung in ein spritzgegossenes Material eindringt.

Die vorliegende Erfindung löst diese Aufgabe durch ein Werkzeug mit den Merkmalen des Anspruchs 1.

Ein erfindungsgemäßes Werkzeug zum Spritzgießen von Kunststoffteilen umfasst einen ersten kavitätbildenden Formeinsatz zur Ausformung eines Spritzgießlings und einen Formkern, welcher beispielsweise die Ausformung eines teilgeöffneten Hohlraumes im Spritzgießling ermöglicht.

Dieser Formkern ist zugleich zur Ausbildung einer Sollbruchstelle im Spritzgießling als Schneidmesser ausgebildet.

Durch diese Ausgestaltung des Formkerns gelingt es eine entsprechende Sollbruchstelle während des Herstellens des Spritzgießlings im Werkzeug einzubringen, was die Fertigungszeit eines solchen Spritzgießlings deutlich verkürzt.

Der Formkern ist rotierbar angeordnet und kann umlaufende Zacken aufweisen.

Weiter weist der Formkern eine endständige Anschlagfläche auf, welche sich gegen das Material des Spritzgießlings abstützt und so ein stärkeres Einsinken der Klinge in das Material beim Einfügen der Sollbruchstelle verhindert.

Vorteilhafte Ausgestaltungen der Erfindung sind Gegenstand der Unteransprüche.

Weiterhin ist der Formkern höhenverstellbar, so dass die Dicke der Grundplatte und die Dicke der Sollbruchstelle eingestellt werden können. Diese Höhenverstellbarkeit kann über eine Gewindeeinstellung realisiert werden.

Die Sollbruchstelle kann während oder nach dem Einspritzen und Erhärten des Kunststoffmaterials in die Kavität des Werkzeugs und vor dem Entformen des Spritzgießlings eingebracht werden.

Als Antrieb des Formkerns kann ein rotatorischer Antrieb genutzt werden, welcher über Verzahnung mit dem Formkern gekoppelt ist. Dieser Antrieb kann zudem mit dem Antrieb zum Öffnen des Werkzeugs gekoppelt werden.

Weitere Vorteile, Merkmale und Einzelheiten der Erfindung ergeben sich aus der nachfolgenden Beschreibung, in ein Ausführungsbeispiel der Erfindung anhand der beiliegenden Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:
Fig. 1 eine Schnittansicht durch eine Ausführungsvariante eines erfindungsgemäßen Werkzeugs;
Fig. 2 Draufsicht auf einen Formkern des Werkzeugs mit einem daran angeordneten Spritzgießling; und
Fig. 3 Detailansicht im Bereich der Kavität des Werkzeugs der Fig. 1.

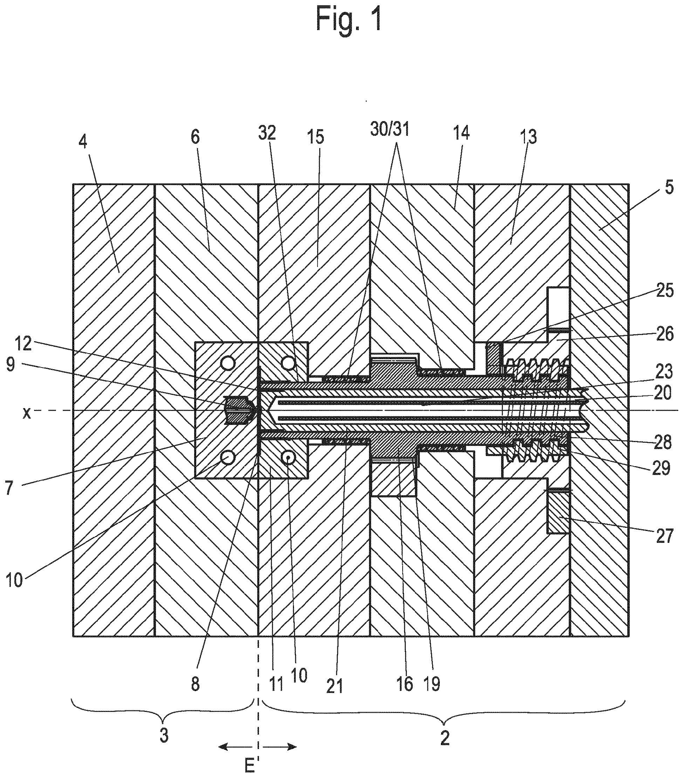

Fig. 1 zeigt ein Werkzeug 1 zum Spritzgießen von Kunststoffteilen, auch Spritzgießling genannt. Das Werkzeug kann im Wesentlichen zwei gegeneinander durch Hubbewegung verfahrbare Werkzeugteile aufweisen, wobei das Werkzeug durchaus noch weitere Bauteile als die besagten zwei Werkzeugteile, welche typischerweise als eine Auswerferseite 2 und eine Düsenseite 3 bezeichnet wird. Der Fachmann spricht dabei zumeist auch von Werkzeughälften, wobei dieser Terminus nicht impliziert, dass das Werkzeug nicht noch weitere Bauteile, z.B. einen Außenrahmen oder dergleichen umfassen kann.

Zumeist ist die Auswerferseite 2 auf Holmen bzw. Bolzen gelagert und linear beweglich gegenüber der feststehenden Düsenseite 3 gelagert. Dies kann auch in der vorliegenden Erfindung in analoger Weise realisiert werden. Die Düsenseite und die Auswerferseite definieren dabei eine Öffnungsebene E.

Die Auswerferseite 2 und die Düsenseite 3 weisen jeweils eine Abfolge von Platten auf, in welchen weitere Werkzeugelemente gehalten sind. Die Auswerferseite 2 weist eine Aufspannplatte 5 auf, welche eine nichtdargestellte Schließvorrichtung, z.B. ein Maschinenhebel, angreift und diese mit einem Druck belastet. Analog weist auch die Düsenseite 3 ebenfalls eine Aufspannplatte 4 auf, an welche die Schließvorrichtung angreift wird, wird dabei ebenfalls mit einem Druck belastet. Somit ist das Werkzeug 1 mit einer Presse vergleichbar.

Die Aufspannplatte 4 der Düsenseite 3 weist zur Auswerferseite hin eine Formplatte 6 auf. Die Formplatte 6 dient u.a. der Halterung eines Formeinsatzes 7, welcher nachfolgend als zweiter Formeinsatz 7 bezeichnet wird. Dieser zweite düsenseitige Formeinsatz 7 weist eine Stirnseite 8, welche zusammen mit einem ersten auswerferseitigen Formeinsatz 11 eine Kavität 12 bildet.

Der zweite Formeinsatz 7 weist eine beheizbare bzw. beheizte Düse 9 auf, über welche ein fließfähiges Kunststoffmaterial in die Kavität 12 eingeleitet wird. Der zweite Formeinsatz 7 kann optional eine Temperierung 10 aufweisen. Die Temperierung 10 kann insbesondere durch Kanäle für ein Kühl- oder Wärmemedium realisiert sein. Analog kann eine Temperierung 10 auch im ersten Formeinsatz 11 vorgesehen sein.

Der erste Formeinsatz 11 kann zudem einen Aufnahmebereich 32 zur Positionierung des Formkerns 16 aufweisen. Zudem weist die Auswerferseite 2 benachbart zur Aufspannplatte 5 in Richtung der Kavität 12 eine Halteplatte 13 auf, an welche sich eine Getriebeplatte 14 anschließt und eine Formplatte 15 zur Halterung des ersten auswerferseitigen Formeinsatzes 11.

Der Formeinsatz 11 weist einen Formkern 16 auf. Dieser Formkern 16 bildet einen materialverdrängenden Teil des Werkzeuges 1, der die Kontur eines Hohlraumes im Spritzgießling formt. Der Formkern 16 kann optional zugleich der Temperierung des Spritzgießlings dienen.

Die Verwendung von Formkernen im Bereich der Spritzgießtechnik ist an sich bekannt. Allerdings ist der Formkern 16 zugleich als Schneidmesser ausgebildet und dient der Verringerung der Wandstärke des Spritzgießlings nach dessen Ausformung unter Ausbildung einer Sollbruchstelle. Die Begriffe Sollbruchstelle und Sollrissstelle werden im Kontext der vorliegenden Erfindung synonym verwendet. Typischerweise lässt sich eine solche Sollbruchstelle mit wenigen 1/10 mm Wandstärke spritzgusstechnisch nur sehr schwer oder gar nicht realisieren. Die so geschaffene Dünnstelle muss keine Sollbruchstelle sein, sondern kann auch eine Scharnierfunktion am Spritzgießling bilden.

Im vorliegenden Fall wird allerdings eine Sollbruchstelle 101 während der Herstellung des Spritzgießlings 100, insbesondere während des Entformungsprozesses, realisiert.

Zur Realisierung der kreisförmigen Sollbruchstelle in der Wandung des Spritzgießlings weist der als Schneidmesser ausgebildet Formkern 16 eine Klinge 17 oder eine alternativ lediglich eine Schneidkante auf, wobei die Klinge oder Schneidkante vorzugsweise eine kreis- oder kreisbogenförmige Kontur aufweisen. Es ist zwar auch gerade im Fall der Schneidkante eine andere Form denkbar, allerdings erlaubt die Kreisbogenform eine zusätzliche Führung der Schneidkante beim Einschneiden. Eine Schneidkante ist aufgrund der hohen Materialverdrängung gegenüber einer Klinge weniger bevorzugt.

Das Schneidmesser kann in einer besonders bevorzugten Ausführungsvariante eine oder mehrere Klingen oder eine oder mehrere Schneidkanten aufweisen, wobei für den Fall, dass das Schneidmesser mehrere Klingen oder Schneidkanten aufweist, alle diese Klingen oder Schneidkanten vorzugsweise kreis- oder kreisbogenförmig ausgebildet sind. Die Kreisbogenform erstreckt sich dabei vorzugsweise über die gesamte Länge einer jeweiligen Klinge oder Schneidkante.

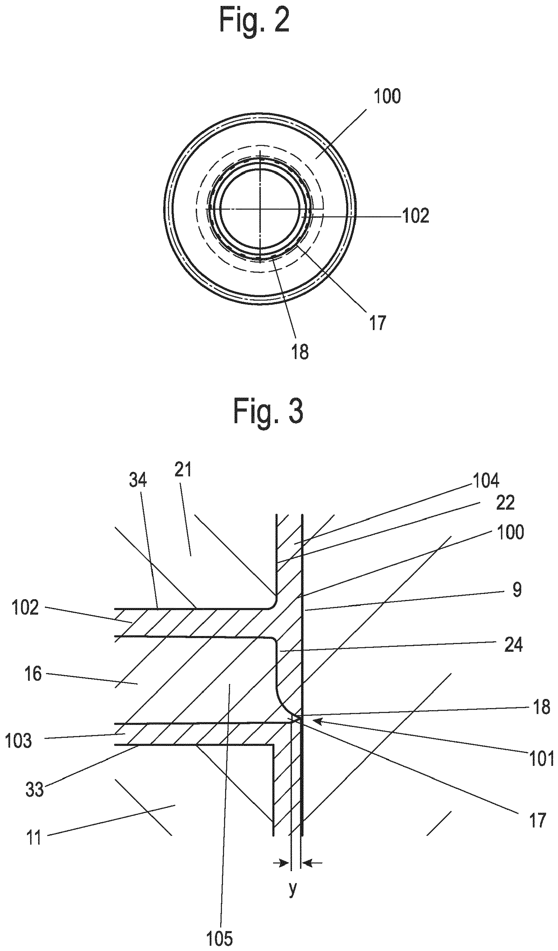

Die Klinge 17 kann dabei vorzugsweise Zacken 18, insbesondere umlaufende Zacken, aufweisen, um durch geringe Teilrotation die gewünschte Sollbruchstelle 101 zu realisieren. Die Zacken 18 sind bezogen auf den Formkern 16 endständig angeordnet. Die Zacken sind insbesondere in Fig. 2 und in Fig. 3 erkennbar.

Zur Ausführung einer zumindest einer Teilrotation oder auch einer Vollrotation ist der Formkern 16 zur Schaffung einer kreisförmigen oder kreisbogenförmigen Sollbruchstelle 101 rotierbar gelagert. Konkret ist diese Lagerung in Fig. 1 derart realisiert, dass oberhalb und unterhalb einer mechanischen Schnittstelle 19 zum Antrieb des Formkerns 16 jeweils eine Lagerungseinrichtung 30, 31 angeordnet ist. Diese Lagerungseinrichtung 30, 31 kann vorzugsweise ein Wälzkörperlager, so z.B. ein Kugellager oder ein Nadellager sein. Eine der Lagereinrichtungen 30 ist dabei in einer Ausnehmung an der Formplatte 15 angeordnet und die zweite Lagereinrichtung 31 ist in der Ausnehmung der Getriebeplatte 14 angeordnet.

Als mechanische Schnittstelle 19 ist in Fig. 1 ein umfangsseitig am zylindrischen Formkern 16 angeordneter Zahnabschnitt angeordnet. Dieser kann mit einer Antriebseinheit 35 z. B. über eine Zahnstange oder ein Zahnrad in Verzahnung treten, wodurch der Formkern in Rotation, insbesondere in Teilrotation, versetzt wird.

Der Formkern 16 ist hohlzylindrisch ausgebildet mit einer Längsachse X. Innerhalb des Formkerns ist eine Temperiereinheit 20 angeordnet, welche den Formkern nach Bedarf abkühlen oder beheizen kann. In Fig. 1 ist die Temperiereinheit 20 stabförmig ausgeführt und erstreckt sich durch die Aufspannplatte 5.

Die Temperiereinheit 20 weist einen stabförmigen Einsatz 21, insbesondere als Gehäuserohr, auf, welcher endständig geschlossen ist und eine Stirnseite 22 als eine die Kavität-begrenzende Fläche aufweist.

Dieser Einsatz 21 kann zugleich Teil eines Kühlelements sein und beispielsweise als Kühlrohr dienen. Entsprechende Kühlsegmente 23 können bei der Ausgestaltung des Einsatzes 21 als Gehäuserohr, innerhalb dieses Gehäuserohres angeordnet sein. Alternativ kann der rohrförmige Einsatz auch aus einem Massivmaterial, insbesondere aus Metall, ausgebildet sein und ggf. Wärme aus der Kavität ableiten.

Wie aus Fig. 1 und insbesondere auch aus Fig. 3 erkennbar, weist das Werkzeug zwischen dem Formkern 16 und dem Einsatz 21 einen ersten Kavitätsbereich 34 zur Ausformung einer ersten Wandung 102 des Spritzgießlings 100 auf.

Zwischen dem Formkern 16 und dem Formeinsatz 4 kann zudem ein zweiter Kavitätsbereich 33 zur Ausformung einer zweiten Wandung 103 des Spritzgießlings 100 angeordnet sein. Zwischen den Wänden ist gemäß der Definition der vorliegenden Erfindung ein teilgeöffneter Hohlraum 105 angeordnet, welcher zylindrisch ausgebildet ist. Dieser wird selbstverständlich erst nach dem Entformen und dem Herauslösen des Spritzgießlings vom Formeinsatz 11 und damit auch vom Formkern 16 gebildet.

Weiterhin weist der Formkern 16 eine endständige Anschlagfläche 24 auf, aus welcher die Klinge 17 hervorsteht. Die Anschlagfläche 24 verläuft im Wesentlichen parallel zur Öffnungsebene E des Werkzeugs und senkrecht zur Längsachse X des Formkerns. Die Anschlagfläche 24 legt in Kombination mit der Höhe der Klinge 17 die sogenannte Schneidhöhe y fest und somit auch die Restwandstärke der Sollbruchstelle 101. Entlang der Anschlagfläche 24 weist der Spritzgießling 100 über einen Teilbereich eine einheitliche Wandstärke auf.

Zudem ist der Formkern 16 höhenverstellbar in Richtung seiner Längsachse X. Dies kann über eine Gewindeeinstellung erfolgen. Hierfür weist das Werkzeug 1 eine in der Halteplatte 13 beweglich-angeordnete Mutter 26, insbesondere eine Leitmutter, auf, welche mit einem Gewinde 28 des Formkerns 16 wechselwirkt und bei Betätigung eine Höhenverstellung erlaubt. Das Werkzeug weist zudem Feststellelemente 25 und 27 auf, mit welchen die Mutter 26 feststellbar ist, so dass der Formkern 16 verdrehgesichert ist. Eines oder mehrere der Feststellelemente 25 und 27 sind selbstverständlich lösbar, um bei Bedarf eine Höhenverstellbarkeit über Betätigung der Mutter 26 vornehmen zu können.

Entsprechende Feststellelemente 25, 27 können Stellstücke oder Zahnstangen oder dergleichen sein. Die Mutter 26 kann dabei zweiteilig aufgebaut mit einem inneren Muttersegment 29 und einem äußeren Segment.

Wie aus Fig. 1 erkennbar, liegt der Formkern 16 an einer Aufspannplatte 5 des Werkzeugs 1 an, so dass ein Druck von der Aufspannplatte 5 unmittelbar auf den Formkern 16 übertragen werden kann.

Weiterhin weist die Kavität 12, welche durch einen ersten und einen zweiten kavitätsbildenden, vorzugsweise jeweils beheizbaren Formeinsatz 11 und 7 gebildet wird, einen Teilbereich zur Ausbildung einer Grundplatte 104 des Spritzgießlings 100 auf. Der die beiden Formeinsätze sind dabei nicht die einzigen kavitätsbildenden Bauteile, sondern auch der Formkern 16 und der Einsatz 21 sind u.a. kavitätsbildende Teile.

Von der Grundplatte 104 stehen senkrecht die erste und die zweite Wand 102 und 103 hervor. Wie aus Fig. 3 ersichtlich, ist der Formkern als Schneidmesser derart angeordnet ist, dass die Sollbruchstelle 101 in die Grundplatte 104 zwischen den Wänden eingefräst wird.

Dabei sind der als Schneidmesser ausgebildete Formkern 16 und der erste kavitätsbildende Formeinsatz 4 auf einer Auswerferseite 2 des Werkzeugs 1 angeordnet. Alternativ ist es allerdings auch möglich ein Schneidmesser mit einem analogen Rotationsmechanismus als Formkern auf der Düsenseite 3 anzuordnen. Allerdings werden einzelne Bauelemente, wie z.B. die Halteplatte auf der Auswerferseite zumeist ohnehin benötigt, da diese eine Halterung eines nicht-dargestellten Auswerferpakets oder weiteren Vorrichtungen gewährleistet. Eine Anordnung auf der Düsenseite würde demgegenüber lediglich eine Vergrößerung des Werkzeugs durch zusätzliche Platten bedeuten.

Bevorzugt um ein Zerschneiden des Spritzgießlings 100 zu verhindern, ist die Rotation des Formkerns 16 durch nicht-näher dargestellte Anschläge begrenzt.

Der Formkern kann zur Verbesserung der Schneidfunktion insbesondere im Bereich der Zacken vorzugsweise aus gehärtetem Stahl, Diamant oder hochfester Legierungen gebildet sein. Zusätzliche Beschichtungen können die Verschleißfestigkeit erhöhen.

Nachfolgend werden einige weitere Merkmale offenbart, welche unabhängig von konkreten Ausführungsvarianten auf alle Varianten der Erfindung anwendbar sind und teilweise bereits zuvor beschrieben wurden.

In einer vorteilhaften Variante kann das Werkzeug eine Düsenseite aufweisen mit einer beheizbaren Düse und dem zweiten Formeinsatz.

In einer weiteren vorteilhaften Variante kann die Antriebseinheit zur Rotation des Formkerns vorgesehen sein und dass Antriebseinheit 35 kann eine Zahnstange und/oder ein Zahnrad zur Verzahnung mit dem Formkern 16 aufweisten.

Die Rotation des Formkerns 16 kann in einer weiteren Ausführungsvariante vorteilhaft durch Anschläge begrenzt sein.

Die Lagerung des Formkerns 16 kann in einer weiteren Ausführungsvariante vorteilhaft oberhalb und unterhalb der Schnittstelle erfolgen.

Der Formkern 16 kann in einer weiteren Ausführungsvariante vorteilhaft höhenverstellbar, insbesondere über eine Gewindeeinstellung über das Gewinde des Formkerns, höhenverstellbar, sein.

### Bezugszeichen

- 1: Werkzeug
- 2: Auswerferseite
- 3: Düsenseite
- 4: Aufspannplatte
- 5: Aufspannplatte
- 6: Formplatte
- 7: Formeinsatz
- 8: Stirnseite
- 9: Beheizbare Düse
- 10: Temperierung
- 11: Formeinsatz
- 12: Kavität
- 13: Halteplatte
- 14: Getriebeplatte
- 15: Formplatte
- 16: Formkern
- 17: Klinge
- 18: Zacken
- 19: mechanische Schnittstelle
- 20: Temperiereinheit
- 21: Stabförmiger Einsatz
- 22: Stirnseite
- 23: Kühlsegmente
- 24: Anschlagfläche
- 25: Feststellelement
- 26: Mutter
- 27: Feststellelement
- 28: Gewinde
- 29: Muttersegment
- 30: Lagereinrichtung
- 31: Lagereinrichtung
- 32: Aufnahmebereich
- 33: Kavitätsbereich
- 34: Kavitätsbereich
- 35: Antriebseinheit

- 100: Spritzgießling
- 101: Sollbruchstelle
- 102: Wandung
- 103: Wandung
- 104: Grundplatte
- 105: Hohlraum

- Y: Schneidhöhe
- X: Längsachse
- E: Öffnungsebene

## Patentansprüche

1. Werkzeug (1) zum Spritzgießen von Kunststoffteilen als Spritzgießlinge (100), umfassend einen ersten kavitätsbildenden Formeinsatz (4) zur Ausformung eines Spritzgießlings (100) und einen Formkern (16), der Formkern (16) zur Ausbildung einer Sollbruchstelle (101) im Spritzgießling (100) als Schneidmesser ausgebildet ist, **dadurch gekennzeichnet, dass** der Formkern (16) zur Schaffung einer kreisförmigen oder kreisbogenförmigen Sollbruchstelle (101) rotierbar gelagert ist und
**dass** der Formkern (16) eine endständige Anschlagfläche (24) aufweist, zum Abstützen gegen das Material des Spritzgießlings zur Verhinderung eines stärkeren Einsinkens der Klinge in das Material beim Einfügen der Sollbruchstelle.

2. Werkzeug nach Anspruch 1, **dadurch gekennzeichnet, dass** das Schneidmesser eine Klinge (17) oder eine Schneidkante aufweist, wobei die Klinge oder Schneidkante vorzugsweise eine kreis- oder kreisbogenförmige Kontur aufweist.

3. Werkzeug nach einem der Ansprüche 1 oder 2, **dadurch gekennzeichnet, dass** der Formkern (16) endständig mehrere Zacken (18) aufweist.

4. Werkzeug nach einem der vorhergehenden Ansprüche, **dadurch gekennzeichnet, dass** der Formkern zur Einstellbarkeit der Dicke der Grundplatte und der Dicke der Sollbruchstelle, insbesondere über eine Gewindeeinstellung, höhenverstellbar ist.

5. Werkzeug nach einem der vorhergehenden Ansprüche, **dadurch gekennzeichnet, dass** die Rotation des Formkerns (16) durch Anschläge begrenzt ist.

6. Werkzeug nach einem der vorhergehenden Ansprüche, **dadurch gekennzeichnet, dass** der Formkern (16) eine mechanische Schnittstelle (19), insbesondere einen randseitigen Zahnabschnitt zur Verzahnung mit einer Antriebseinheit aufweist.

7. Werkzeug nach einem der vorhergehenden Ansprüche, **dadurch gekennzeichnet, dass** der Formkern (16) eine Temperiereinheit (20) im Inneren des Formkerns (16) aufweist, wobei die Temperiereinheit (20) vorzugsweise einen stabförmigen Einsatz (21), besonders bevorzugt ein stabförmiges Gehäuserohr mit einer kavitätsbegrenzenden Stirnseite (22), umfasst.

8. Werkzeug nach einem der vorhergehenden Ansprüche, **dadurch gekennzeichnet, dass** der Formkern (16) verdrehsicher an einer Halteplatte /13) des Werkzeugs (1) festgelegt ist und/oder dass Formkern (16) in einem Endbereich an einer kavitätsfernen Seite des Formkerns (16) ein Gewinde (28) aufweist.

9. Werkzeug nach einem der vorhergehenden Ansprüche, **dadurch gekennzeichnet, dass** der Formkern (16) an einer Aufspannplatte (5) des Werkzeugs (1) anliegt.

10. Werkzeug nach einem der vorhergehenden Ansprüche, **dadurch gekennzeichnet, dass** eine Getriebeplatte (14) und/oder eine Formplatte (15) des Werkzeugs (1) eine Lagereinrichtung (30, 31) zur rotierbaren Lagerung des Formkerns (16) aufweist, wobei die Lagereinrichtung (30, 31) vorzugsweise ein Wälzkörperlager, insbesondere ein Kugellager, ist.

11. Werkzeug nach einem der vorhergehenden Ansprüche, **dadurch gekennzeichnet, dass** der Formeinsatz (16) einen Aufnahmebereich (32) zur Positionierung des Formkerns (16) aufweist.

12. Werkzeug nach einem der vorhergehenden Ansprüche, **dadurch gekennzeichnet, dass** der Formkern (16) einen stabförmigen Einsatz (21) aufweist, wobei zwischen dem Formkern (16) und dem Einsatz (21) ein erster Kavitätsbereich (33) zur Ausformung einer Wandung (102) des Spritzgießlings (100) angeordnet ist und wobei besonders bevorzugt zwischen dem Formkern (16) und dem Formeinsatz (4) ein zweiter Kavitätsbereich (34) zur Ausformung einer zweiten Wandung (103) des Spritzgießlings (100) angeordnet ist.

13. Werkzeug nach einem der vorhergehenden Ansprüche, **dadurch gekennzeichnet, dass** die Kavität (12) durch einen ersten und einen zweiten kavitätsbildenden Formeinsatz (4, 7), welche vorzugsweise beheizbar ausgebildet sind, gebildet wird, wobei die Kavität (12) zur Ausbildung einer Grundplatte (104) ausgebildet ist, von welcher senkrecht die erste und die zweite Wand (102, 103) hervorstehen, wobei der Formkern (16) als Schneidmesser derart angeordnet ist, dass die Sollbruchstelle (101) in die Grundplatte (104) zwischen den Wänden (102, 103) eingebracht, insbesondere eingefräst, ist.

14. Werkzeug nach einem der vorhergehenden Ansprüche, **dadurch gekennzeichnet, dass** das Schneidmesser (16) und der erste kavitätsbildende Formeinsatz (4) auf einer Auswerferseite (2) des Werkzeugs (1) angeordnet ist.

15. Werkzeug nach einem der vorhergehenden Ansprüche, **dadurch gekennzeichnet, dass** zumindest eine oder beide der kavitätsbildenden Formeinsätze (4, 7) durch eine Hubbewegung gegenüber dem jeweils anderen Formeinsatz (4, 7) bewegbar sind, so dass eine Freigabe der Kavität (12) im Rahmen einer Entformung realisierbar ist.

## Claims

1. Tool (1) for injection-molding plastic parts as injection-molded parts (100), comprising a first cavity-forming mold insert (4) for shaping an injection-molded part (100) and a mold core (16), the mold core (16) being designed as a cutting knife for forming a predetermined breaking point (101) in the injection-molded part (100), **characterized in that** the mold core (16) is rotatably mounted to create a circular or arcuate predetermined breaking point (101) and
**in that** the mold core (16) has an end stop surface (24) for support against the material of the injection molded part to prevent the blade from sinking more strongly into the material when the predetermined breaking point is inserted.

2. Tool according to claim 1, **characterized in that** the cutting knife has a blade (17) or a cutting edge, wherein the blade or cutting edge preferably has a circular or arcuate contour.

3. Tool according to one of claims 1 or 2, **characterized in that** the mold core (16) has a plurality of serrations (18) at the end.

4. Tool according to one of the preceding claims, **characterized in that** the mold core is height-adjustable for adjusting the thickness of the base plate and the thickness of the predetermined breaking point, in particular by means of a threaded adjustment.

5. Tool according to one of the preceding claims, **characterized in that** the rotation of the mold core (16) is limited by stops.

6. Tool according to one of the preceding claims, **characterized in that** the mold core (16) has a mechanical interface (19), in particular a tooth section on the edge side for meshing with a drive unit.

7. Tool according to one of the preceding claims, **characterized in that** the mold core (16) has a temperature control unit (20) in the interior of the mold core (16), wherein the temperature control unit (20) preferably comprises a rod-shaped insert (21), particularly preferably a rod-shaped housing tube with a cavity-limiting end face (22).

8. Tool according to one of the preceding claims, **characterized in that** the mold core (16) is fixed non-rotatably on a holding plate (13) of the tool (1) and/or **in that** the mold core (16) has a thread (28) in an end region on a side of the mold core (16) remote from the cavity.

9. Tool according to one of the preceding claims, **characterized in that** the mold core (16) rests against a clamping plate (5) of the tool (1).

10. Tool according to one of the preceding claims, **characterized in that** a gear plate (14) and/or a mold plate (15) of the tool (1) has a bearing device (30, 31) for rotatably mounting the mold core (16), wherein the bearing device (30, 31) preferably is a rolling element bearing, in particular a ball bearing.

11. Tool according to one of the preceding claims, **characterized in that** the mold insert (16) has a receiving region (32) for positioning the mold core (16).

12. Tool according to one of the preceding claims, **characterized in that** the mold core (16) has a rod-shaped insert (21), wherein a first cavity region (33) for shaping a wall (102) of the injection-molded part (100) is arranged between the mold core (16) and the insert (21), and wherein a second cavity region (34) for shaping a second wall (103) of the injection-molded part (100) is arranged particularly preferably between the mold core (16) and the mold insert (4).

13. Tool according to one of the preceding claims, **characterized in that** the cavity (12) is formed by a first and a second cavity-forming mold insert (4, 7), which are preferably designed to be heatable, wherein the cavity (12) is designed to form a base plate (104), from which the first and second walls (102, 103) project vertically, wherein the mold core (16) is arranged as a cutting knife in such a way that the predetermined breaking point (101) is introduced, in particular milled, into the base plate (104) between the walls (102, 103).

14. Tool according to one of the preceding claims, **characterized in that** the cutting knife (16) and the first cavity-forming mold insert (4) are arranged on an ejector side (2) of the tool (1).

15. Tool according to one of the preceding claims, **characterized in that** at least one or both of the cavity-forming mold inserts (4, 7) can be moved by a lifting movement relative to the respective other mold insert (4, 7), so that a release of the cavity (12) can be realized in the context of demolding.

## Revendications

1. Outil (1) pour le moulage par injection de pièces en matière plastique sous forme de pièces moulées par injection (100), comprenant un premier insert de moule formant une cavité (4) pour le formage d'une pièce moulée par injection (100) et un noyau de moule (16), lequel noyau de moule (16) est conçu comme un couteau pour former une zone de cassure définie (101) dans la pièce moulée par injection (100), **caractérisé en ce que** le noyau de
moule (16) est supporté avec possibilité de rotation pour former une zone de cassure définie (101) circulaire ou en arc de cercle et **en ce que** le noyau de moule (16) présente une surface de butée (24) d'extrémité pour s'appuyer contre le matériau de la pièce moulée par injection afin d'empêcher la lame de s'enfoncer plus fortement dans le matériau lors de la création de la zone de cassure définie.

2. Outil selon la revendication 1, **caractérisé en ce que** le couteau présente une lame (17) ou une arête coupante, la lame ou l'arête coupante ayant de préférence un contour circulaire ou en arc de cercle.

3. Outil selon l'une des revendications 1 ou 2, **caractérisé en ce que** le noyau de moule (16) présente plusieurs dents (18) à son extrémité.

4. Outil selon l'une des revendications précédentes, **caractérisé en ce que** le noyau de moule est réglable en hauteur, en particulier à l'aide d'un filetage de réglage, afin de permettre l'ajustement de l'épaisseur de la plaque de base et de l'épaisseur de la zone de cassure définie.

5. Outil selon l'une des revendications précédentes, **caractérisé en ce que** la rotation du noyau de moule (16) est limitée par des butées.

6. Outil selon l'une des revendications précédentes, **caractérisé en ce que** le noyau de moule (16) présente une interface mécanique (19), en particulier une partie de bord dentée destinée à engrener avec une unité d'entraînement.

7. Outil selon l'une des revendications précédentes, **caractérisé en ce que** le noyau de moule (16) comprend une unité d'équilibrage de la température (20) à l'intérieur du noyau de moule (16), laquelle unité d'équilibrage de la température (20) comprend de préférence un insert (21) en forme de barre, en particulier un tube de logement en forme de barre avec une face d'extrémité (22) délimitant la cavité.

8. Outil selon l'une des revendications précédentes, **caractérisé en ce que** le noyau de moule (16) est fixé de façon à empêcher sa rotation sur une plaque de maintien (13) de l'outil (1) et/ou **en ce que** le noyau de moule (16) présente un filetage (28) dans une partie d'extrémité, sur un côté du noyau de moule (16) distant de la cavité.

9. Outil selon l'une des revendications précédentes, **caractérisé en ce que** le noyau de moule (16) repose sur un plateau de serrage (5) de l'outil (1).

10. Outil selon l'une des revendications précédentes, **caractérisé en ce qu'**un plateau d'engrenage (14) et/ou un plateau de moule (15) de l'outil (1) présentent une installation de palier (30, 31) pour l'appui rotatif du noyau de moule (16), laquelle installation de palier (30, 31) est de préférence un roulement, en particulier un roulement à billes.

11. Outil selon l'une des revendications précédentes, **caractérisé en ce que** l'insert de moule (16) présente une partie de logement (32) pour le positionnement du noyau de moule (16).

12. Outil selon l'une des revendications précédentes, **caractérisé en ce que** le noyau de moule (16) présente un insert (21) en forme de barre, une première partie de cavité (33) étant disposée entre le noyau de moule (16) et l'insert (21) pour former une paroi (102) de la pièce moulée par injection (100) et une deuxième partie de cavité (34) étant en particulier disposée entre le noyau de moule (16) et l'insert de moule (4) pour former une deuxième paroi (103) de la pièce moulée par injection (100).

13. Outil selon l'une des revendications précédentes, **caractérisé en ce que** la cavité (12) est formée par un premier et un deuxième inserts de moule formant la cavité (4, 7), de préférence conçus pour pouvoir être chauffés, la cavité (12) étant conçue pour former une plaque de base (104) de laquelle la première paroi et la deuxième (102, 103) dépassent verticalement, le noyau de moule (16) en forme de couteau étant disposé de telle façon que la zone de cassure définie (101) est formée, en particulier fraisée, dans la plaque de base (104) entre les parois (102, 103).

14. Outil selon l'une des revendications précédentes, **caractérisé en ce que** le couteau (16) et le premier insert de moule formant la cavité (4) sont disposés du côté éjecteur (2) de l'outil (1).

15. Outil selon l'une des revendications précédentes, **caractérisé en ce qu'**au moins un ou les deux inserts de moule formant la cavité (4, 7) peuvent être déplacés par un mouvement de levage par rapport à l'autre insert de moule (4, 7), de façon à pouvoir dégager la cavité (12) au cours du démoulage.
